# EUROPÄISCHE PATENTSCHRIFT

(11) **EP 2 933 519 B1**
(45) Veröffentlichungstag und Bekanntmachung des Hinweises auf die Patenterteilung: **19.12.2018**
(21) Anmeldenummer: 15156642.9
(22) Anmeldetag: 26.02.2015
(51) Int. Cl.: F16D 48/02, F16D 25/12, F16D 13/72

(54) **KUPPLUNGSANORDNUNG, ANTRIEBSSTRANG UND KUPPLUNGSBETÄTIGUNGSVERFAHREN**
COUPLING ASSEMBLY, POWERTRAIN AND COUPLING ACTUATION METHOD
AGENCEMENT D'EMBRAYAGE, CHAÎNE CINÉMATIQUE ET PROCÉDÉ D'ACTIONNEMENT D'EMBRAYAGE

(30) Priorität: 11.04.2014 DE 102014105168
(43) Veröffentlichungstag der Anmeldung: 21.10.2015
(73) Patentinhaber: GETRAG B.V. & Co. KG, 74199 Untergruppenbach (DE)
(72) Erfinder: Seufert, Martin, 71711 Steinheim (DE); Rühle, Günter, 74369 Löchgau (DE); Weidner, Markus, 71540 Murrhardt (DE)
(74) Vertreter: Rausch, Gabriele

(56) Entgegenhaltungen:
- WO-A1-2010/127659
- DE-A1- 10 143 833
- DE-A1-102005 014 654
- DE-A1-102010 026 999
- DE-A1-102014 102 250
- GB-A- 2 036 203
- US-A1- 2004 159 520

## Beschreibung

Die vorliegende Erfindung betrifft eine Kupplungsanordnung, insbesondere für ein manuelles oder ein automatisiertes Kraftfahrzeug-Stufengetriebe, mit einer nasslaufenden Reibkupplung zur Anordnung zwischen einem Antriebsmotor und einem Stufengetriebe, mit einem Fluidaktuator zur Betätigung der Reibkupplung, mit einer Fluidversorgungseinrichtung, die einen Elektromotor und eine von dem Elektromotor angetriebene Pumpenanordnung aufweist, wobei die Pumpenanordnung über einen ersten Zweig mit dem Fluidaktuator verbunden ist, und mit einem Nebenzweig, über den ein Teil des von der Pumpenanordnung bereitgestellten Fluidvolumenstroms hin zu einem Niederdruckbereich leitbar ist.

Ferner betrifft die vorliegende Erfindung einen Antriebsstrang mit einem Antriebsmotor und einer Kupplungsanordnung der oben bezeichneten Art. Schließlich betrifft die vorliegende Erfindung ein Verfahren zur Betätigung und ggf. zur Kühlung einer Kupplungsanordnung, insbesondere der oben beschriebenen Art.

Auf dem Gebiet der Antriebsstränge für Kraftfahrzeuge dienen Reibkupplungen als Trenn- bzw. Anfahrkupplungen zwischen Antriebsmotor und einem Stufengetriebe. Der Antriebsmotor kann beispielsweise ein Verbrennungsmotor sein, kann jedoch auch eine Hybrid-Antriebseinheit sein. Das Stufengetriebe ist gewöhnlich ein Getriebe in Vorgelegebauweise mit einer Mehrzahl von Gangstufen, die über jeweilige Schaltkupplungen (Synchroneinheiten) ein- und auslegbar sind.

Bei manuell betätigten Antriebssträngen dieser Art werden die Schaltkupplungen über einen Gangschalthebel im Fahrzeuginnenraum betätigt. Die Kupplung wird über ein Kupplungspedal betätigt. Die bislang zu diesem Zweck verwendeten Kupplungen sind trockene Reibkupplungen, die durch Federvorspannung normalerweise geschlossen sind, also durch Betätigung des Kupplungspedals in einen Schleifzustand gebracht und geöffnet werden können.

Es ist auf dem Gebiet solcher Antriebsstränge ferner bekannt, die Getriebebetätigung und/oder die Kupplungsbetätigung zu automatisieren, wozu Aktuatoren wie beispielsweise Hydraulikaktuatoren verwendet werden.

Beispielsweise ist es aus dem Dokument WO 2006/128 637 A1 bekannt, eine Reibkupplung in Form einer Lamellenkupplung mittels eines Stufenkolbens zu betätigen, um einen Vorhub bis zum Erreichen eines Anliegens der Kupplung (Schleifpunkt) schnell durchfahren zu können.

Ferner offenbart das Dokument DE 10 2012 002 162 A1 einen Fluidzylinder zur Betätigung einer Reibkupplung, wobei der Zylinder in eine Öffnungsrichtung der Reibkupplung vorgespannt ist (normally open) und wobei ein Druckanschluss einer elektromotorisch angetriebenen Pumpe direkt mit einem Betätigungsanschluss des einfach wirkenden Fluidzylinders verbunden ist. Die Pumpe kann dabei bidirektional antreibbar sein, wobei der Kolben mit einer Abdichteinrichtung verbunden sein kann, um den Fluidzylinder gegen einen Unterdruck abzudichten, wenn die Pumpe zum Abpumpen von Fluid aus dem Fluidraum verwendet wird. Zur Betätigung der Pumpenanordnung wird der Druck in dem Fluidzylinder durch Verändern der Drehzahl des Elektromotors eingestellt. Ein derartiger "Pumpenaktuator" kann mit wenigen Bauteilen realisiert werden.

Bei derartigen Pumpenaktuatoren ist es in der Regel auch nicht nötig, Druckspeicher im Hydraulikkreis vorzusehen, wie es beispielsweise aus dem Dokument DE 10 2009 005 410 B4 bekannt ist.

Das Dokument DE 10 2004 033 439 C5 offenbart eine weitere Form von Pumpenaktuator, wobei ein Motor zwei Pumpen antreibt, von denen eine für ein schnelles Schließen der Reibkupplung bei geringem Kraftaufwand ausgelegt ist und wobei die zweite Pumpe für eine Betätigung der Reibkupplung mit einer großen Kraft bei einem geringen Hub ausgelegt ist.

Sofern die in einem solchen Antriebsstrang verwendete Reibkupplung eine nasslaufende Kupplung ist, ist es auch bekannt, diese zu kühlen. Das Dokument DE 10 2011 118 574 A1 offenbart beispielsweise eine Antriebsstrang-Kühlanordnung mit einem ersten Kühlkreis zur Kühlung einer Doppelkupplungsanordnung für ein Doppelkupplungsgetriebe und mit einem zweiten Kühlkreis zur Kühlung beispielsweise einer elektrischen Maschine und/oder eines Stufengetriebes. Die Kühlkreise sind dabei an unterschiedliche Pumpenanschlüsse einer einzelnen Pumpe angeschlossen, die mittels eines Elektromotors bidirektional antreibbar ist. Der Kühlmittel-Volumenstrom ist durch Verändern der Drehzahl des Pumpen-Elektromotors einstellbar.

Schließlich ist aus dem Dokument DE 10 2011 102 277 A1 eine Kupplungsordnung für ein Kraftfahrzeug bekannt, die zwei Reibkupplungen aufweist, die mittels jeweiliger Aktuatoren betätigt werden. Zu deren Betätigung ist eine bidirektional mittels eines Elektromotors antreibbare Pumpe vorgesehen, die je nach Drehrichtung entweder die eine oder die andere Kupplung betätigt. Aus diesem Dokument ist es auch bekannt, bei Erreichen eines bestimmten Druckes von dem Volumenstrom zur Betätigung der Reibkupplung einen Kühl-Volumenstrom abzuzweigen, der über eine Blende begrenzt sein kann. Eine derartige Fluidversorgungseinrichtung für die Betätigungszylinder einerseits und die Kühleinrichtung andererseits kann jedoch die in einem Antriebsstrang vorkommenden Zustände nicht immer optimal abbilden. Sofern hingegen für die Betätigung einerseits und die Kühlung andererseits unterschiedliche Aktuatoren bzw. Fluidversorgungseinrichtungen verwendet werden, ergibt sich ein erhöhter Aufwand. Dies gilt insbesondere im Vergleich zu trockenen Reibkupplungen, bei denen eine Fluidkühlung nicht vorgesehen ist.

Das Dokument WO 2010/127659 A1 zeigt eine gattungsgemäße Kupplungsanordnung mit Abzweiganordnung.
Trockenkupplungen haben generell Nachteile bezüglich Gewicht, Massenträgheitsmoment, Ansteuerbarkeit, Wärmeabfuhr etc.. Nasslaufende Reibkupplungen haben Nachteile wegen des größeren Bauteilaufwandes für die Automatisierung.
Sofern zur Betätigung einer Reibkupplung ein Fluidaktuator verwendet wird, dessen Stellgröße (Druck oder Weg) durch einen Pumpenaktuator geregelt wird, also durch Regeln der Drehzahl eines Motors zum Antrieb der Pumpenanordnung, ist generell für eine feinfühlige Regelung eine gewisse Leckage vorteilhaft. In vielen Fällen ist daher ein Druckanschluss einer Pumpenanordnung und/oder ein Fluidaktuator über eine Blende mit einem Tank verbunden. Gerade bei hohen Drücken führt dies jedoch zu einer vergleichsweise hohen Verlustleistung, was die CO₂-Emissionen eines Fahrzeugs erhöhen kann, das mit einer derartigen Kupplungsanordnung ausgestattet ist.
Es ist vor diesem Hintergrund eine Aufgabe der Erfindung, eine verbesserte Kupplungsanordnung, einen verbesserten Antriebsstrang sowie ein verbessertes Verfahren zum Betätigen einer Kupplungsanordnung anzugeben, wobei der Bauteilaufwand möglichst gering sein soll, so dass sich Kosten-, Package- und/ oder Gewichtsvorteile ergeben können, und/oder wobei unterschiedliche Zustände effektiver abgebildet werden können, insbesondere hinsichtlich des Wirkungsgrades.
Die obige Aufgabe wird bei der eingangs genannten Kupplungsanordnung durch eine Abzweiganordnung gelöst, die dazu angesteuert wird den zu dem Nebenzweig geleiteten Neben-Fluidvolumenstrom zu reduzieren, wenn ein Betätigungsdruck in dem Fluidaktuator einen Schwellendruck überschreitet und/oder der Fluidaktuator einen Schwellenweg überschreitet.
Ferner wird die obige Aufgabe gelöst durch einen Antriebsstrang mit einem Antriebsmotor, mit einer Kupplungsanordnung, die eine Reibkupplungsanordnung mit einem Eingangsglied aufweist, das mit dem Antriebsmotor verbunden ist,
und mit einem Stufengetriebe, dessen Eingang mit einem Ausgangsglied der Reibkupplungsanordnung verbunden ist, wobei die Kupplungsanordnung eine erfindungsgemäße Kupplungsanordnung ist.
Schließlich wird die obige Aufgabe gelöst durch ein Verfahren zur Betätigung und ggf. zur Kühlung einer Kupplungsanordnung, insbesondere einer Kupplungsanordnung der erfindungsgemäßen Art, wobei die Kupplungsanordnung eine nasslaufende Reibkupplung sowie eine Fluidversorgungseinrichtung aufweist, die mit einem Fluidaktuator zur Betätigung der Reibkupplung verbunden ist, wobei die Fluidversorgungseinrichtung dazu ausgebildet ist, einen geregelten Betätigungsdruck für den Fluidaktuator einzustellen und über eine Abzweiganordnung mit einem Nebenzweig verbunden zu werden, über den bedarfsweise ein Teil des von der Pumpenanordnung bereitgestellten Fluidvolumenstroms hin zu einem Niederdruckbereich leitbar ist, wobei das Verfahren den Schritt beinhaltet, den zu dem Nebenzweig geleiteten Fluidvolumenstrom zu reduzieren, wenn ein Betätigungsdruck in den Fluidaktuator einen Schwellendruck überschreitet und/oder der Fluidaktuator einen Schwellenweg überschreitet.
Durch die Abzweiganordnung ist es möglich, bei hohen Betätigungsdrücken den Neben-Fluidvolumenstrom zu reduzieren, was in vielen Fällen zu einer Energieeinsparung führen kann.
Die Pumpenanordnung ist vorzugsweise direkt über den ersten Zweig mit dem Fluidaktuator verbunden. Unter einer direkten Verbindung wird vorliegend verstanden, dass zwischen der Pumpenanordnung und dem Fluidaktuator kein Druckregelventil oder Druckreduzierventil angeordnet ist. Derartige Ventile sind als Proportional- oder Schieberventile ausgebildet, die erhöhte Anforderungen hinsichtlich Reinheit bei der Montage stellen. Ferner sind diese Ventile teuer. Eine direkte Verbindung kann folglich eine ununterbrochene Verbindung zwischen der Pumpenanordnung und dem Fluidaktuator sein, kann jedoch auch eine durch ein Ventil hergestellte direkte Verbindung sein, beispielsweise eine Verbindung durch ein Wegeventil hindurch.
Die Abzweiganordnung ist erfindungsgemäß so ausgebildet, dass in jedem ihrer Betriebszustände eine solche direkte Verbindung zwischen der Pumpenanordnung und dem Fluidaktuator eingerichtet ist, und zwar vorzugsweise durch die Abzweiganordnung hindurch.
Die Abzweiganordnung wird hierbei vorzugsweise durch ein Wegeventil gebildet. Ein Wegeventil ist zum einen kostengünstiger als Schieberventile und erfordert keine hohen Anforderungen hinsichtlich der Reinheit bei der Montage etc.
Durch den Nebenzweig wird vorzugsweise eine definierte Leckage eingerichtet. Bei einer direkten Verbindung zwischen Pumpenanordnung und Fluidaktuator wird eine Stellgröße des Fluidaktuators wie beispielsweise der Betätigungsdruck oder der Betätigungsweg durch Regeln der Drehzahl der Pumpenanordnung (also Regeln der Drehzahl des Elektromotors) eingeregelt. Auch aus diesem Grund sind in dem ersten Zweig keine Druckregelventile oder ähnliches erforderlich.
Durch das Einrichten einer definierten Leckage in dem Nebenzweig kann hierbei die Regelbarkeit dieser Stellgröße deutlich verbessert werden, vorzugsweise sowohl hinsichtlich Ansprechverhalten als auch Regelgenauigkeit. Dies spielt insbesondere in solchen Stellbereichen eine Rolle, bei denen einen Momentenübertragung über die nasslaufenden Reibkupplung genau eingestellt wird, also beispielsweise im Bereich eines Schleifpunktes wie eines Eingriffspunktes bzw. Kiss-Punktes. Wenn die Reibkupplung hingegen in einem ihrer Endbereiche ist, beispielsweise vollständig geöffnet oder vollständig geschlossen, spielt die Regelbarkeit normalerweise keine so große Rolle mehr. Daher kann beispielsweise bei höheren Betätigungsdrücken der Neben-Fluidvolumenstrom reduziert werden, über den die definierte Leckage eingerichtet ist, um auf diese Weise Energie zu sparen.

In manchen Fällen ist der Nebenzweig ferner mit einer Kühleinrichtung zur Fluidkühlung der Reibkupplung verbunden, so dass der Neben-Fluidvolumenstrom einen Kühlvolumenstrom beinhaltet.

Durch die Abzweiganordnung kann zudem für diesen Fall das Problem gelöst werden, dass ein Betätigungsdruck und ein Kühlvolumenstrom im Stand der Technik zwangsweise miteinander korrelieren. Dann, wenn der Betätigungsdruck groß ist, ist die Reibkupplung beispielsweise vollständig geschlossen oder vollständig geöffnet (je nachdem, ob die Reibkupplung normally open oder normally closed ist). In diesen Fällen wird jedoch in der Regel keine hohe Kühlleistung benötigt, da die Kühlleistung hauptsächlich dann benötigt wird, wenn die Reibkupplung sich in einem Schleifzustand befindet. Durch das Bereitstellen eines hohen Kühlvolumenstromes bei einem hohen Betätigungsdruck können jedoch Schleppverluste erzeugt werden, die den Wirkungsgrad und/oder den Komfort des Antriebsstranges verringern.

Beispielsweise können die Schleppverluste dazu führen, dass sich Schaltkupplungen schwieriger einlegen lassen. Dies ist insbesondere dann problematisch, wenn zwar die Kupplung automatisiert mittels des Fluidaktuators betätigt wird, die Gangstufen in dem Stufengetriebe jedoch manuell betätigt werden.

Durch die Abzweiganordnung der Kupplungsanordnung ist es nun vorzugsweise möglich, den Fluidvolumenstrom zu der Kühleinrichtung zu reduzieren, wenn der Betätigungsdruck einen Schwellendruck überschreitet und/oder der Fluidaktuator einen Schwellenweg überschreitet.

Folglich können für diesen Fall Schleppverluste insbesondere bei hohen Betätigungsdrücken bzw. vollem Betätigungsweg des Fluidaktuators verringert werden.

Die Aufgabe wird somit vollkommen gelöst.

Gemäß einer besonders bevorzugten Ausführungsform ist die Reibkupplung in eine geschlossene Position vorgespannt.

Eine derartige Reibkupplung vom "Normally-closed"-Typ ist in solchen Fällen vorteilhaft, wenn der Antriebsstrang eine einzelne Reibkupplung aufweist und/oder die Schaltkupplungen zur Gangbetätigung des Getriebes manuell betätigt werden.

Durch die normalerweise geschlossene Position kann hierbei ein hoher Wirkungsgrad erreicht werden, da der Fluidaktuator nur dann einzusetzen ist, wenn die Kupplung geöffnet wird, beispielsweise bei Gangwechsel und/oder im Stand vor einem Anfahrvorgang oder dergleichen.

Gemäß einer weiteren Ausführungsform ist der Schwellendruck größer als ein Schleifpunkt-Betätigungsdruck, bei dem die Reibkupplung ihren Eingriffspunkt ("Kisspoint") hat. Hierdurch kann gewährleistet werden, dass für den Fall, dass der Nebenzweig eine definierte Leckage beinhaltet, diese definierte Leckage jedenfalls dann zur Verfügung steht, wenn sich die Reibkupplung in dem Schleifzustand befindet. Hierdurch kann während des Schleifzustandes der Reibkupplung eine gute Regelbarkeit erreicht werden, also dann, wenn die Stellgröße der Reibkupplung durch Regeln der Drehzahl der Pumpenanordnung eingestellt bzw. geregelt wird. In Fällen, bei denen der Nebenzweig mit einer Kühleinrichtung verbunden ist, kann zudem ggf. gewährleistet werden, dass der Fluidvolumenstrom zur Kühlung der Reibkupplung nicht reduziert ist, wenn sich die Reibkupplung in dem Schleifzustand befindet. Vielmehr wird der Volumenstrom, der der Kühleinrichtung bereitgestellt wird, erst dann reduziert, wenn die Kupplung beispielsweise vollständig geöffnet ist (bei einer Normally-closed-Kupplung). In diesem Fall können die Schleppverluste effizient vermieden werden, da der Kupplungsvolumenstrom reduziert ist, wenn die Kupplung geöffnet ist und während dieser Phase Gangwechsel durchgeführt werden, da Synchronisierungsvorgänge aufgrund der verringerten Schleppverluste hierdurch erleichtert werden können.

Gemäß einer bevorzugten Ausführungsform ist die Abzweiganordnung dazu ansteuerbar, um den zu dem Nebenzweig geleiteten Neben-Fluidvolumenstrom zu unterbrechen, wenn der Betätigungsdruck in dem Fluidaktuator den Schwellendruck überschreitet und/oder der Fluidaktuator den Schwellenweg überschreitet.

Für diesen Fall kann der Neben-Fluidvolumenstrom komplett unterbrochen werden, so dass beispielsweise bei vollständig geöffneter Kupplung und folglich hohem Betätigungsdruck (bei einer Normally-closed-Kupplung) kein Leckagevolumenstrom mehr abfließt und folglich eine hohe Energieeinsparung erreichbar ist.

Gemäß einer weiteren bevorzugten Ausführungsform ist die Abzweiganordnung dazu ausgebildet, den Fluidvolumenstrom von der Pumpenanordnung in einen Fluidvolumenstrom zu dem Fluidaktuator und einen Neben-Fluidvolumenstrom zu dem Nebenzweig aufzuteilen, wenn der Betätigungsdruck in dem Fluidaktuator einen zweiten Schwellendruck unterschreitet und/oder der Fluidaktuator einen zweiten Schwellenweg unterschreitet.

Der erste und der zweite Schwellendruck bzw. der erste und der zweite Schwellenweg können identisch sein, sind jedoch vorzugsweise unterschiedlich, wobei der zweite Schwellendruck vorzugsweise kleiner ist als der erste Schwellendruck und wobei der zweite Schwellenweg vorzugsweise kleiner ist als der erste Schwellenweg. Wenn der erste und der zweite Schwellenwert sich jeweils unterscheiden, kann für die Betätigung der Abzweiganordnung eine gewisse Hysterese eingerichtet werden, so dass unnötige Schaltvorgänge der Abzweiganordnung vermieden werden.

In einer bevorzugten Ausführungsform kann die Abzweiganordnung als 3/2-Wegeventil ausgebildet sein, wobei in einer Betätigungsposition der Pumpen-Fluidvolumenstrom aufgeteilt wird, und wobei in der anderen Position der Pumpen-Fluidvolumenstrom ausschließlich zu dem Fluidaktuator geführt wird.

Gemäß einer bevorzugten Ausführungsform weist der Nebenzweig eine Blende auf.

Für diesen Fall kann der Nebenzweig beispielsweise direkt mit einem Niederdruckbereich wie einem Tank verbunden sein. Die Blende stellt für diesen Fall beispielsweise eine definierte Leckage bereit, über die die Regelbarkeit der Stellgröße der Reibkupplung verbessert werden kann. Die Blende ist vorzugsweise eine passive starre Blende.

Gemäß einer weiteren bevorzugten Ausführungsform ist der Nebenzweig mit einer Kühleinrichtung zur Fluidkühlung der Reibkupplung verbunden.

Über die Kühleinrichtung fließt ein Kühlvolumenstrom hin zu der Reibkupplung, um diese zu kühlen. Die Kühlung ist, wie oben erwähnt, insbesondere dann notwendig, wenn sich die Reibkupplung im Bereich ihres Schleifpunktes befindet. Bei vollständig geöffneter oder vollständig geschlossener Kupplung kann dieser Volumenstrom folglich reduziert werden. Während sich die Reibkupplung im Schleifzustand oder im Bereich des Schleifzustandes befindet, wird hingegen über den Kühlvolumenstrom nicht nur eine Kühlung bereitgestellt, es wird auch vorzugsweise eine definierte Leckage bereitgestellt, über die die Regelbarkeit der Stellgröße der Reibkupplung verbessert werden kann.

Hierbei ist es von besonderem Vorzug, wenn der Nebenzweig eine Umschaltanordnung aufweist, die dazu ansteuerbar ist, um einen Fluidvolumenstrom zu der Kühleinrichtung zu reduzieren, wenn ein Betätigungsdruck in dem Fluidaktuator einen dritten Schwellendruck überschreitet und/oder der Fluidaktuator einen dritten Schwellenweg überschreitet.

Der dritte Schwellendruck bzw. der dritte Schwellenweg sind insbesondere kleiner als der erste Schwellendruck bzw. der erste Schwellenweg. Hierdurch ist es vorzugsweise möglich, in dem Nebenzweig zunächst den Kühlvolumenstrom zu reduzieren und anschließend (bei Erreichen des ersten Schwellenwertes) den Neben-Fluidvolumenstrom insgesamt zu reduzieren bzw. vorzugsweise abzuschalten.

Insgesamt ist es ferner vorteilhaft, wenn der Nebenzweig mit einem Treibanschluss einer Saugstrahlpumpe verbunden ist. Diese Ausführungsform stellt in Verbindung mit dem Oberbegriff des Anspruchs 1 eine eigene Erfindung dar.

Ein Sauganschluss einer solchen Saugstrahlpumpe kann beispielsweise mit einem Tank verbunden sein, wobei ein Diffusor einer solchen Saugstrahlpumpe vorzugsweise mit der Reibkupplung zum Zwecke von deren Kühlung und/oder Schmierung verbunden ist.

Über den Treibanschluss der Saugstrahlpumpe kann eine definierte Leckage bereitgestellt werden, ähnlich der Funktion einer Blende, so dass es für diesen Fall vorzugsweise nicht erforderlich ist, den Nebenzweig über eine Blende mit dem Tank zu verbinden.

Gemäß einer bevorzugten Ausführungsform ist die Pumpenanordnung durch eine einzelne Pumpe gebildet, die einen ersten Pumpenanschluss aufweist, der mit der Abzweiganordnung verbunden ist. Eine direkte Verbindung der Pumpenanordnung mit dem Fluidaktuator über die Abzweiganordnung kann vorzugsweise bedeuten, dass in dem ersten Zweig keine Proportional- oder Servoventile zur Druckregelung bereitgestellt werden müssen. Denn diese führen bei der Montage derartiger Kupplungsanordnungen zu erhöhten Reinheitsanforderungen. Vorliegend kann der Betätigungsdruck für die Reibkupplung über das Einstellen der Drehzahl des Elektromotors geregelt werden.

Bei dieser Ausführungsform kann die einzelne Pumpe nach der Art eines Pumpenaktuators angetrieben werden, indem der Betätigungsdruck durch Einstellen der Drehzahl des Elektromotors geregelt wird.

In dem Nebenzweig kann der von der Pumpenanordnung bereitgestellte Volumenstrom in einer Ausführungsform direkt zu einem Kühlanschluss der Reibkupplung geführt werden. In einer Variante kann in dem Nebenzweig auch eine Strahlpumpe derart angeordnet werden, dass zumindest ein Teil des Neben-Fluidvolumenstroms mit einem Treibanschluss einer solchen Saugstrahlpumpe verbunden wird. Der Sauganschluss einer solchen Saugstrahlpumpe kann in diesem Fall mit einem Tank bzw. einem Reservoir verbunden werden. Hierdurch kann der Volumenstrom, der zur Kühlung bereitgestellt wird, gegenüber dem von der Pumpenanordnung bereitgestellten Volumenstrom signifikant erhöht werden.

Derartige Saugstrahlpumpen sind vergleichsweise kostengünstig realisierbar und weisen in der Regel keine beweglichen Bauteile auf, so dass sie ebenfalls bei relativ geringen Reinheitsanforderungen hergestellt werden können.

Ferner ist es in einer weiteren alternativen Ausführungsform bevorzugt, wenn die Pumpenanordnung eine Betätigungspumpe und eine Kühlpumpe aufweist, wobei ein Pumpenanschluss der Betätigungspumpe mit der Abzweiganordnung verbunden ist und wobei ein Pumpenanschluss der Kühlpumpe mit einer Kühleinrichtung der Reibkupplung verbunden ist.

Bei dieser Ausführungsform können für das Betätigen der Reibkupplung und für das Kühlen der Reibkupplung unterschiedliche Pumpen verwendet werden, beispielsweise eine Volumenpumpe für die Kühlpumpe und eine Druckpumpe für die Betätigungspumpe.

Es versteht sich bei dieser Ausführungsform jedoch, dass die Betätigungspumpe und die Kühlpumpe vorzugsweise gemeinsam von dem Elektromotor angetrieben werden. Allerdings ist es in manchen Ausführungsformen auch denkbar, den Elektromotor über unterschiedliche Übersetzungen mit den beiden Pumpen zu verbinden, um gegebenenfalls unterschiedliche Pumpencharakteristika zu realisieren.

Generell ist es hierbei denkbar, dass die Betätigungspumpe und die Kühlpumpe jeweils unidirektional arbeiten, wobei deren jeweilige zweite Pumpenanschlüsse jeweils als reine Sauganschlüsse ausgebildet sind.

In einer alternativen bevorzugten Ausführungsform sind die Betätigungspumpe und die Kühlpumpe bidirektional antreibbar, wobei ein erster und ein zweiter Pumpenanschluss der Kühlpumpe mit dem Nebenzweig über eine Rückschlagventilanordnung verbunden sind, die so ausgebildet ist, dass in beiden Drehrichtungen der Kühlpumpe Fluid in den zweiten Zweig geleitet wird.

Ein bidirektionales Antreiben der Betätigungspumpe hat den Vorteil, dass Fluid aus dem Fluidaktuator gegebenenfalls schneller wieder abgesaugt werden kann, das Fluid also nicht allein durch eine Vorspannfeder herausgedrückt werden muss. Dies kann das Ansprechverhalten und die Regelbarkeit verbessern.

Für die Kühlpumpe ist hingegen vorgesehen, dass die Rückschlagventilanordnung dafür sorgt, dass die Kühlpumpe unabhängig von der Drehrichtung einen Volumenstrom zum Kühlen der Kühleinrichtung bereitstellen kann.

Generell ist es denkbar, die Abzweiganordnung auf verschiedene Art und Weise zu realisieren, beispielsweise durch Einflussnahme auf die Kopplung zwischen Elektromotor und Pumpenanordnung.

Von besonderem Vorzug ist es jedoch, wenn die Abzweiganordnung eine Ventilanordnung aufweist, die zur Ventilbetätigung in Abhängigkeit von einem Betätigungsdruck mit dem Fluidaktuator hydraulisch verbunden ist.

Mit einer derartigen Ventilanordnung, die über den Betätigungsdruck druckgesteuert ist, beispielsweise gegen eine Vorspannfeder, kann der erste Schwellendruck auf konstruktiv einfache Weise eingestellt werden.

Generell ist es bevorzugt, wenn die Ventilanordnung ein eigenes Ventil ist, das in örtlicher Nähe zu der Pumpenanordnung angeordnet wird, also außerhalb der Reibkupplung.

In einer vorteilhaften Ausgestaltung betrifft die vorliegende Erfindung folglich die Ansteuerung einer nassen Kupplung für ein Kraftfahrzeug. Die Ansteuerung des Fluidaktuators kann mittels eines einzigen Aktuators (mittels eines Elektromotors) erfolgen. Die nasse Reibkupplung kann durch einen Fluiddruck gesteuert sein, den eine Pumpenanordnung (zum Beispiel eine Gerotorpumpe etc.) in Kombination mit dem Elektromotor zur Verfügung stellt. Ferner kann die Kupplung ggf. mit Kühlöl versorgt werden, das von derselben Pumpenanordnung über hydraulische Elemente aus dem Hydraulikkreis abgezweigt wird. In manchen Varianten kann ein Rückwärtsdrehen der Pumpe zur Hauptversorgung des Kühlölzweigs verwendet werden. Zur Erhöhung des Kühlölvolumenstroms kann eine Saugstrahlpumpe verwendet werden. Anstelle einer einzelnen Pumpe kann an den Elektromotor eine zweite Pumpe angeschlossen werden, die ausschließlich den Kühlvolumenstrom liefert.

Gegenüber Trockenkupplungen wird durch die nasse Reibkupplung eine Reihe von Vorteilen erzielt, insbesondere hinsichtlich Gewicht, Massenträgheitsmoment, Ansteuerbarkeit, Wärmeabfuhr etc.

Insgesamt ergibt sich eine kosten-, package- und gewichtsgünstige Aktuierung für den Öldruck zur Kupplungsbetätigung und ggf. den Kühlölvolumenstrom zur Kupplungskühlung, mit einer geringen Anzahl an Bauteilen.

Obgleich die vorliegende Erfindung bevorzugt in Verbindung mit einer "Normally-closed"-Reibkupplung verwendet wird, lassen sich die verschiedenen Lösungen auch auf eine "Normally-open"-Kupplung anwenden. Bei Kombination mit einer Normally-open-Reibkupplung ist es vorteilhaft, wenn man bei offener Kupplung nachkühlen kann, jedoch auch zum Synchronisieren den Kühlölvolumenstrom ganz abschalten kann. Da das volle Moment in diesem Fall bei hohen Betätigungsdrücken erreicht wird, kann bei hohen Drücken eine weitere Umschaltstellung vorgesehen werden, die den Kühlölvolumenstrom reduziert, wenn die Kupplung geschlossen ist.

Mit anderen Worten könnte man bei einer solchen Variante auch vorsehen, dass eine Reduzierung des Kühlölvolumenstromes auch erfolgt, wenn der Betätigungsdruck in dem ersten Zweig einen weiteren Schwellendruck (kleinen Druck) unterschreitet und/oder der Fluidaktuator einen weiteren (kleineren) Schwellenweg unterschreitet.

Sofern die Reibkupplung eine Normally-open-Kupplung ist, wie oben erwähnt, kann bei Betriebstemperatur eine Leckage durch die Pumpenanordnung selbst eventuell ausreichend sein, um eine gute Steuerung bzw. Regelbarkeit zu gewährleisten, insbesondere dann, wenn das volle Drehmoment abverlangt wird und Maximaldruck anliegen muss. Auch in diesen Fällen kann der Nebenzweig ggf. abgeschaltet werden, so dass eine energieoptimierte Aktuierung möglich ist.

Insgesamt ergeben sich mit der Erfindung ein hohes Energiesparpotential und mittelbar eine CO₂-Reduzierung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer ersten Ausführungsform einer erfindungsgemäßen Kupplungsanordnung;
- Fig. 2: eine schematische Darstellung einer weiteren Ausführungsform einer erfindungsgemäßen Kupplungsanordnung;
- Fig. 3: eine schematische Darstellung eines Antriebsstranges eines Kraftfahrzeuges mit einer Reibkupplung, die Bestandteil einer erfindungsgemäßen Kupplungsanordnung darstellen kann;
- Fig. 4: eine schematische Darstellung einer weiteren Ausführungsform einer erfindungsgemäßen Kupplungsanordnung;
- Fig. 5: eine alternative Ausführungsform einer Ventilanordnung für die Kupplungsanordnung der Figur 4;
- Fig. 6: eine alternative Ausführungsform einer Ventilanordnung für die Kupplungsanordnung der Figur 4;
- Fig. 7: ein Diagramm von Betätigungsdruck und Kupplungsmoment über dem Kupplungsweg sowie ein Diagramm von Kühlölvolumenstrom über der Drehzahl der Pumpenanordnung;
- Fig. 8: ein Zeitablaufdiagramm von Schaltzuständen einer Abzweiganordnung sowie ein Diagramm von Betätigungsdruck, Volumenstrom und Kupplungsweg über der Zeit; und
- Fig. 9: eine Darstellung von Kupplungsmoment und Drehzahl einer Pumpenanordnung über dem Betätigungsdruck.

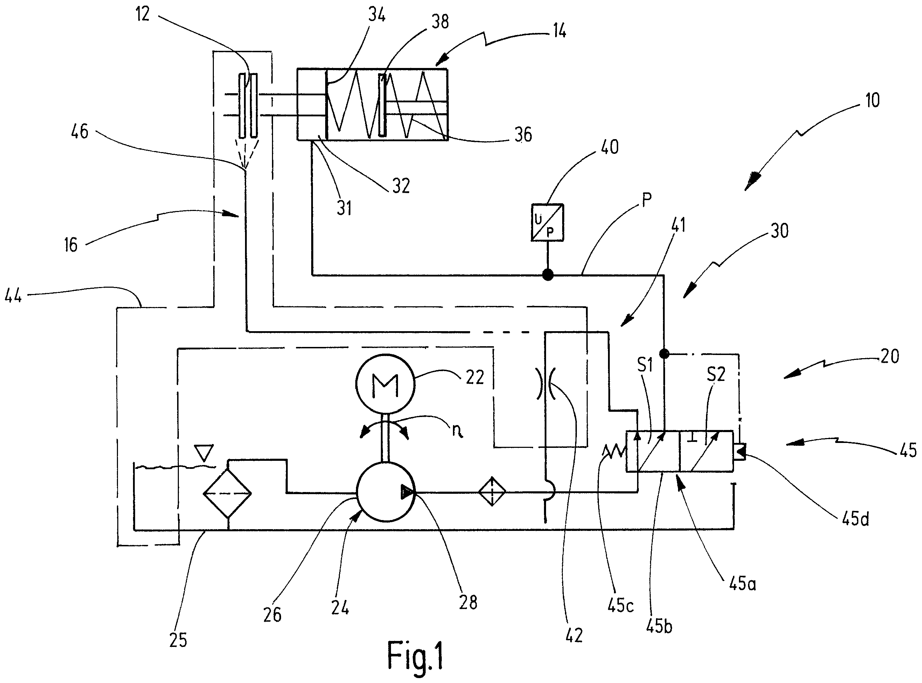

In Figur 1 ist in schematischer Form eine Kupplungsanordnung für einen Kraftfahrzeug-Antriebsstrang schematisch dargestellt und generell mit 10 bezeichnet.

Die Kupplungsanordnung 10 beinhaltet eine nasslaufende Reibkupplung 12 in Form einer Lamellenkupplung, einen Fluidaktuator 14 in Form eines einfach wirkenden Hydraulikzylinders zur Betätigung der Reibkupplung 12 sowie eine Kühleinrichtung 16 zur Kühlung der Reibkupplung 12 durch Zuführen von Kühlöl.

Die Kupplungsanordnung 10 beinhaltet ferner eine Fluidversorgungseinrichtung 20. Die Fluidversorgungseinrichtung 20 weist einen Elektromotor 22 auf, der eine Pumpenanordnung 24 antreibt, und zwar mit einer Drehzahl n. Die Pumpenanordnung 24 beinhaltet in der Ausführungsform der Figur 1 eine einzelne unidirektionale Pumpe, die einen Sauganschluss 26 aufweist, der mit einem Tank bzw. Reservoir 25 verbunden ist. Die Pumpe weist ferner einen Druckanschluss 28 auf, über den Fluid für den Fluidaktuator 14 und die Kühleinrichtung 16 bereitgestellt wird. Der Sauganschluss 26 und der Druckanschluss 28 können jeweils mit Fluidfiltern verbunden sein, die in Figur 1 dargestellt, jedoch nicht näher bezeichnet sind.

Die Fluidversorgungseinrichtung 20 weist ferner einen ersten Zweig 30 auf, der den Druckanschluss 28 direkt mit einem Betätigungsanschluss 31 des Fluidaktuators 14 verbindet. Unter einer direkten Verbindung wird vorliegend verstanden, dass in dem ersten Zweig 30 keine Proportional- oder Servoventile enthalten sind, die gewöhnlich zur Druckregelung verwendet werden. Der in dem ersten Zweig 30 bereitgestellte Druck P wird vielmehr durch Regeln der Drehzahl n des Elektromotors 22 eingestellt.

Der Betätigungsanschluss 31 des Fluidaktuators 14 ist mit einem Zylinderraum 32 verbunden, in dem ein Kolben 34 verschieblich gelagert ist. Der Kolben 34 ist mit der Reibkupplung 12 zu deren Betätigung gekoppelt. Dem Fluidaktuator 14 ist ferner eine Feder 36 zugeordnet, die den Kolben 34 in eine Position vorspannt, bei der die Reibkupplung 12 geschlossen ist ("normally closed"). Durch Befüllen des Zylinderraums 32 wird der Kolben 34 gegen die Feder 36 in eine Position überführt, bei der die Reibkupplung 12 geöffnet ist. Eine maximale Öffnungsposition des Kolbens 34 ist durch einen Anschlag 38 einstellbar, der in dem Fluidaktuator 14 angeordnet ist.

An den ersten Zweig 30 kann eine Druckmesseinrichtung 40 angeschlossen sein, die den Druck P in dem ersten Zweig 30 und folglich in dem Zylinderraum 32 misst.

Die Fluidversorgungseinrichtung 20 weist ferner einen Nebenzweig 41 auf. Der Nebenzweig 41 dient vorzugsweise zur Einrichtung einer gezielten Leckage, und zwar insbesondere für den Fall, dass der in dem ersten Zweig 30 bereitgestellte Druck P durch Regeln der Drehzahl n des Elektromotors 22 eingestellt wird. Hierdurch kann die Regelbarkeit verbessert werden. In einer Ausführungsform kann der Nebenzweig 41 hierzu eine Blende 42 aufweisen.

Die Fluidversorgungseinrichtung 20 beinhaltet ferner einen Niederdruckbereich 44, innerhalb dessen die Blende 42 angeordnet sein kann. Der Nebenzweig 41 ist generell dazu ausgebildet, einen Neben-Fluidvolumenstrom zu dem Niederdruckbereich 44 zuzuführen. Fig. 1 zeigt ferner, dass der Niederdruckbereich 44 die Kühleinrichtung 16 beinhalten kann, also beispielsweise eine Fluidleitung des Niederdruckbereiches 44 mit einem Kühlanschluss 46 der Reibkupplung 12 verbunden sein kann. Folglich kann zumindest ein Teil des Neben-Fluidvolumenstroms in Form eines Kühlfluid-Volumenstroms der Reibkupplung 12 zugeführt werden. Die gezielte Leckage kann in dem Niederdruckbereich 44 folglich auch über den Kühlanschluss 46 bereitgestellt werden, und zwar alternativ zu der Blende 42 oder zusätzlich hierzu.

Der Druckanschluss 28 der Pumpenanordnung 24 ist über eine Abzweiganordnung 45 sowohl mit dem ersten Zweig 30 (und folglich mit dem Fluidaktuator 14) und mit dem Nebenzweig 41 verbunden. Die Abzweiganordnung 45 ist vorliegend als Ventilanordnung 45a ausgebildet, und zwar in Form eines 3/2-Wegeventils 45b. Die Ventilanordnung 45a ist mittels einer Feder 45c in eine erste Stellung S1 vorgespannt und kann mittels einer Druckbetätigungseinrichtung 45d in die zweite Stellung S2 versetzt werden, und zwar gegen die Kraft der Feder 45c. Die Druckbetätigungseinrichtung 45d ist hierbei mit dem ersten Zweig 30 verbunden, also mit dem Fluidaktuator 14.

Folglich wird die Ventilanordnung 45a der Abzweiganordnung 45 in Abhängigkeit von dem Betätigungsdruck P in dem Fluidaktuator 14 von der ersten Stellung S1 in die zweite Stellung S2 bewegt.

In der ersten Stellung S1 ist der Pumpenanschluss 28 sowohl mit dem ersten Zweig 30 als auch mit dem Nebenzweig 41 verbunden. In der zweiten Stellung S2 ist der Pumpenanschluss 28 lediglich mit dem ersten Zweig 30 verbunden, und der Anschluss zu dem Nebenzweig 41 ist unterbrochen.

Die Feder 45c ist so ausgebildet, dass die Ventilanordnung 45a von der ersten Stellung S1 in die zweite Stellung S2 geschaltet wird, wenn der Betätigungsdruck P in dem Fluidaktuator 14 einen Schwellendruck P_{SW} überschreitet. Alternativ hierzu ist es möglich, die Abzweiganordnung 45 weggesteuert zu betätigen, und zwar in Abhängigkeit von einem Betätigungsweg des Kolbens 34 des Fluidaktuators 14, derart, dass die Abzweiganordnung 45 in die zweite Stellung S2 schaltet, wenn der Kolben 34 des Fluidaktuators einen Schwellenweg S_{SW} überschreitet.

In manchen Varianten kann die Abzweiganordnung 45 dazu ausgebildet sein, den Fluidvolumenstrom von der Pumpenanordnung in einen Fluidvolumenstrom zu dem Fluidaktuator und einen Neben-Fluidvolumenstrom zu dem Nebenzweig 41 aufzuteilen, wenn der Betätigungsdruck P in dem Fluidaktuator 14 einen zweiten Schwellendruck unterschreitet und/oder der Fluidaktuator 14 einen zweiten Schwellenweg unterschreitet.

Nachfolgend werden weitere Ausführungsformen von Kupplungsanordnungen beschrieben, die hinsichtlich Aufbau und Funktionsweise generell der Kupplungsanordnung 10 der Fig. 1 entsprechen. Gleiche Elemente sind daher durch gleiche Bezugszeichen gekennzeichnet. Im Folgenden werden im Wesentlichen die Unterschiede erläutert.

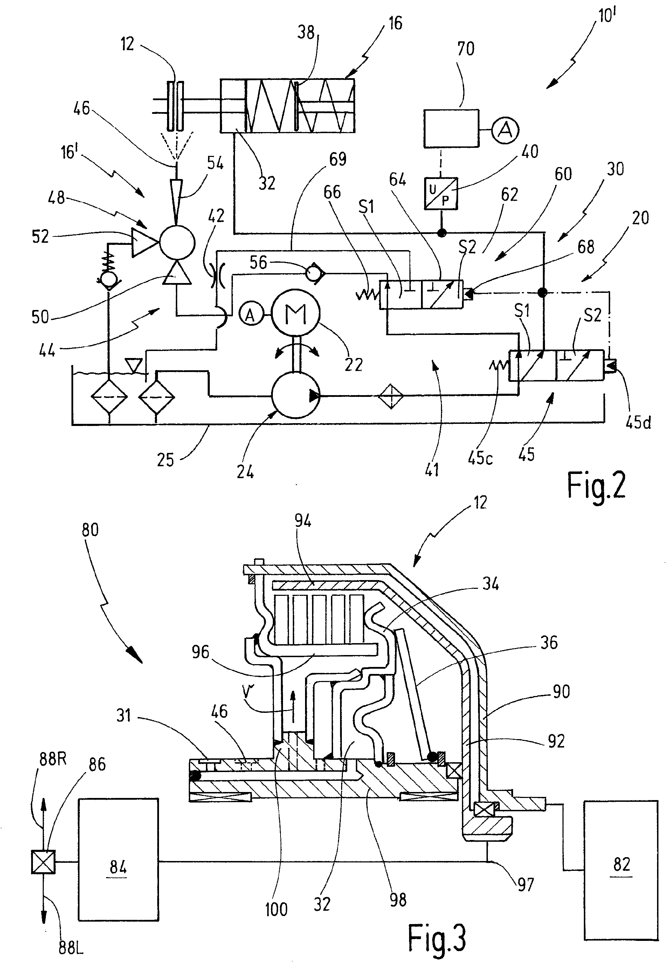

In Fig. 2 ist eine Kupplungsanordnung 10' gezeigt, deren Pumpenanordnung 24 und Abzweiganordnung 45 identisch sind wie bei der Ausführungsform der Fig. 1. Lediglich in dem Niederdruckbereich 44 sind einige Änderungen vorgesehen.

Zum einen ist zu erkennen, dass der Kühlanschluss 46 der Reibkupplung 12 mit einer Saugstrahlpumpe 48 verbunden ist. Die Saugstrahlpumpe 48 weist einen Treibanschluss 50, einen Sauganschluss 52 und einen Diffusor 54 auf. Der Treibanschluss 50 der Saugstrahlpumpe 48 ist über ein Rückschlagventil 56 mit der Abzweiganordnung 45 verbindbar, genauer mit dem Nebenzweig 41. Der Sauganschluss 52 der Saugstrahlpumpe 48 ist über ein nicht näher bezeichnetes Rückschlagventil mit dem Tank 45 verbunden. Der Diffusor 54 ist mit dem Kühlanschluss 46 verbunden und liefert den Volumenstrom zum Kühlen/Schmieren der Reibkupplung 12, der sich aus einem an dem Treibanschluss 50 bereitgestellten Volumenstrom und dem über den Sauganschluss 52 angesaugten Volumenstrom zusammensetzt. Das Bereitstellen einer solchen Saugstrahlpumpe 48 in dem Niederdruckbereich 44 ist optional, kann also auch bei der Ausführungsform der Fig. 1 vorgesehen sein. Alternativ kann bei der vorliegenden Ausführungsform einer Kupplungsanordnung 10' die Saugstrahlpumpe 48 auch weggelassen werden.

Der Niederdruckbereich 44 der Kupplungsanordnung 10' beinhaltet ferner eine Umschaltanordnung 60, die dazu ansteuerbar bzw. ausgebildet ist, um einen Fluidvolumenstrom V von der Pumpenanordnung 24 zu der Kühleinrichtung 16 zu reduzieren, wenn der Betätigungsdruck P in dem ersten Zweig 30 einen Schwellendruck (dritter Schwellendruck) überschreitet.

Der dritte Schwellenwert ist vorzugsweise kleiner gleich dem ersten Schwellenwert.

Die Umschaltanordnung 60 beinhaltet eine Ventilanordnung 62, die vorliegend ein 3/2-Wegeventil 64 aufweist. Das Ventil 64 ist mittels einer Feder 66 in eine erste Position vorgespannt, bei der ein ungehinderter Durchfluss von dem Nebenzweig 41 hin zu dem Kühlanschluss 46 der Reibkupplung 12 eingerichtet ist. In dieser ersten Position ist ein dritter Anschluss des Ventils 64 mit dem Tank 25 verbunden.

Das Ventil 64 weist ferner einen Druckbetätigungsanschluss 68 auf. Der Druckbetätigungsanschluss 68 ist mit dem ersten Zweig 30 verbunden, so dass das Ventil bei Erreichen eines Druckes P, der einen dritten Schwellendruck überschreitet, in eine zweite Position versetzt wird, und zwar gegen die Vorspannkraft der Feder 66. In der zweiten Position ist der pumpenseitige Anschluss des Ventils 64 mit dem Tank 25 verbunden, so dass kein Fluid mehr hin zu dem Kühlanschluss 46 geleitet wird. Die hierzu verwendete Rückführleitung 69 kann gegebenenfalls eine Blende 42 beinhalten.

Bei der obigen Ausführungsform schaltet das Ventil 64 schlagartig bei Überschreiten des dritten Schwellendrucks von einem hohen Kühlvolumenstrom V auf einen Kühlvolumenstrom von Null um. Das Ventil kann jedoch auch so gestaltet sein, dass das Ventil und damit der Kühlölvolumenstrom anhand des Betätigungsdruckes P kontinuierlich von der Position 1 (voller Durchlass im Ventil zum Kühlanschluss 46 hin) in die Position 2 (vollständige Sperrung des Durchganges zu dem Kühlanschluss 46 hin) übergehen kann. Der dritte Schwellendruck, ab dem das Ventil 64 umschaltet, ist so gewählt, dass er größer ist als ein Schleifpunkt-Betätigungsdruck, bei dem die Reibkupplung ihren Schleifpunkt hat. Hierdurch wird gewährleistet, dass ein Abschalten des Kühlvolumenstromes bei einem Öffnungsvorgang der Reibkupplung erst dann erfolgt, wenn gewährleistet ist, dass während des Schleifpunktes (Kisspoint) Kühlfluid (insbesondere Kühlöl) zur Kühlung bereitgestellt werden konnte.

Das Umschalten kann beispielsweise erst bei vollständig geöffneter Kupplung erfolgen und/oder dann, wenn sich der Kolben 34 an dem Anschlag 38 befindet. Hierbei kann es auch bevorzugt sein, wenn man dann den Druck um einen bestimmten Betrag bis zum Umschalten des Ventils weiter erhöhen muss. Hierdurch kann sichergestellt werden, dass im Bereich des Schleifpunktes immer zuverlässig, über alle Systemtoleranzen hinweg, Kühlfluid vorhanden ist.

Das Unterbrechen des Kühlfluidvolumenstromes ist deswegen bevorzugt, um bei geöffneter Kupplung das Schleppmoment zu reduzieren. Dies kann in einem nachgeschalteten Getriebe Synchronisierungsvorgänge bei Gangwechsel erleichtern und damit die Schaltkräfte für den Fahrer beim Wechseln der Gänge reduzieren. Der Schaltvorgang insgesamt kann somit komfortabler gestaltet werden.

Das Regeln des Druckes P kann über eine Steuereinrichtung 70 erfolgen, die mit dem Sensor 40 und dem Motor 22 verbunden ist.

Die Umschaltanordnung 60 ist der Abzweiganordnung 45 nachgeordnet und innerhalb des Niederdruckbereiches 44 angeordnet. Die Umschaltanordnung 60 ist dabei vorzugsweise so ausgestaltet, dass über den Nebenzweig 41 bei jeder Stellung der Umschaltanordnung 60 eine gezielte Leckage bereitgestellt wird, sei es über den Treibanschluss 50 der Saugstrahlpumpe 48 oder über die Blende 42. Wenn die Abzweiganordnung 45 in die zweite Schaltstellung S2 schaltet, wird der Nebenzweig 41 vorzugsweise vollständig abgeschaltet, so dass der von der Pumpenanordnung 24 bereitgestellte Volumenstrom ausschließlich in den ersten Zweig 30 geführt wird. Dies erfolgt bei einem ersten Schwellenwert des Betätigungsdruckes, der über den Betätigungsanschluss 45d und die Feder 45c eingestellt wird. Der dritte Schwellenwert, bei dem die Umschaltanordnung 60 in die zweite Position bzw. Stellung S2 umschaltet, ist vorzugsweise kleiner als der erste Schwellenwert, so dass bei einer Erhöhung des Betätigungsdruckes ab dem dritten Schwellenwert zunächst die Umschaltanordnung 60 umschaltet, um den Kühlölvolumenstrom zu unterbrechen, und anschließend die Abzweiganordnung 54 umschaltet, um den Volumenstrom in den Nebenzweig 41 zu unterbinden.

Der Aspekt, dass eine gezielte Leckage zur Verbesserung der Regelbarkeit des Betätigungsdruckes P in Abhängigkeit von der Drehzahl der Pumpenanordnung 24 nicht nur über eine Blende 42 eingestellt werden kann, sondern über einen Treibanschluss 50 einer Saugstrahlpumpe, stellt einen eigenständigen Aspekt der vorliegenden Erfindung dar. Hierdurch kann in manchen Ausführungsformen auf eine separate Blende 42 verzichtet werden, da der Treibanschluss 50 als solcher bereits eine definierte Leckage bereitstellt, die das Regelverhalten des Regelkreises verbessern kann.

Figur 3 zeigt in schematischer Form einen Antriebsstrang 80 für ein Kraftfahrzeug. Der Antriebsstrang 80 beinhaltet einen Antriebsmotor 82, der durch einen Verbrennungsmotor gebildet sein kann oder durch eine Hybrid-Antriebseinheit. Ferner weist der Antriebsstrang 80 eine Reibkupplung 12 auf sowie ein Stufengetriebe 84, dessen Ausgang mit einem Differenzial 86 verbunden ist. Das Differenzial 86 verteilt Antriebsleistung auf angetriebene Räder 88L, 88R.

Die Reibkupplung 12 weist ein Eingangsglied 90 auf, das mit dem Antriebsmotor 12 verbunden ist. Ferner weist die Reibkupplung 12 ein Ausgangsglied 92 auf, das mit einer Eingangswelle des Stufengetriebes 84 verbunden ist. Das Stufengetriebe 84 ist vorzugsweise als Vorgelegegetriebe mit Radsätzen für jeweilige Gangstufen und Synchron-Schaltkupplungen ausgestattet.

Die Reibkupplung 12 ist als nasslaufende Lamellenkupplung ausgebildet, wobei das Ausgangsglied 92 mit einem Außenlamellenträger 94 verbunden ist. Ein Innenlamellenträger 96 ist in Drehrichtung starr mit dem Eingangsglied 90 gekoppelt.

Eine Längsachse der Reibkupplung 12 ist bei 97 gezeigt. Eine Nabe 98 erstreckt sich von der dem Antriebsmotor 12 entgegengesetzten Seite in die Reibkupplung 12 hinein, wobei die Nabe 98 vorzugsweise drehbar in Bezug auf ein Gehäuse gelagert ist. Ferner kann eine Getriebeeingangswelle drehbar in Bezug auf die Nabe 98 im Inneren der Nabe 98 gelagert sein.

Die Nabe 98 weist einen radial hervortretenden Steg 100 auf, der starr mit dem Eingangsglied 90 verbunden ist. In Betrieb dreht sich folglich die Nabe 98 mit dem Eingangsglied 90.

An dem Außenumfang der Nabe ist ein Kolben 34 axial verschieblich gelagert. Über geeignete Dichtungen wird zudem ein Zylinderraum 32 gebildet. Der Kolben 34 ist mittels einer schematisch angedeuteten Feder 36 so vorgespannt, dass mit den Lamellenträgern 94, 96 verbundene Lamellen im Normalfall aneinander angedrückt werden, um die Reibkupplung 12 zu schließen.

Die Nabe 98 weist einen Betätigungsanschluss 31 sowie einen Kühlanschluss 46 auf. Diese Anschlüsse können über eine Drehdurchführung mit einem gehäusefesten Abschnitt der Kupplungsanordnung 10 verbunden sein. Über den Betätigungsanschluss 31 wird Fluid in den Zylinderraum 32 geführt, um den Kolben 34 von dem Lamellenpaket wegzudrücken, gegen die Kraft der Feder 36, um die Reibkupplung 12 zu öffnen.

Der Kühlanschluss 46 kann mit einem zu dem Zylinderraum 32 benachbarten Raum verbunden sein, wie es durch gestrichelte Linien angedeutet ist, wobei der benachbarte Raum als Druckausgleichsraum dient, um ein Öffnen der Reibkupplung 12 aufgrund von Zentrifugalkräften zu vermeiden.

Ferner ist der Kühlanschluss 46 über eine radiale Durchbrechung in dem Radialsteg 100 mit einem Raum innerhalb der Kupplung 12 verbunden, über den der Volumenstrom V auf den Innenumfang des Innenlamellenträgers 96 geführt werden kann, wobei der Innenlamellenträger nicht näher dargestellte Radialöffnungen aufweist, über die der Volumenstrom V in den Bereich zwischen den Lamellen geführt werden kann.

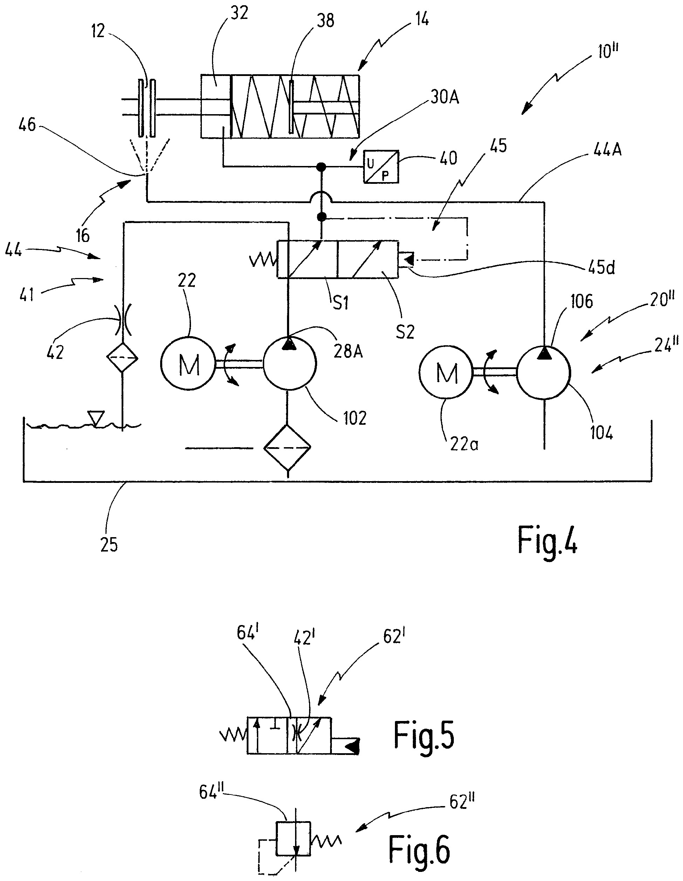

In Figur 4 ist eine Kupplungsanordnung 10" gezeigt, bei der die Pumpenanordnung 24 eine Betätigungspumpe 102 sowie eine Kühlpumpe 104 aufweist. Die beiden Pumpen 102, 104 sind beide an den Elektromotor 22 angeschlossen und drehen sich gemeinsam mit diesem. Ein Druckanschluss 28A der Betätigungspumpe 102 ist mit dem ersten Zweig 30A verbunden, und zwar über die Abzweiganordnung 45. Ein Druckanschluss 106 der Kühlpumpe 104 ist mit einem Zweig 44A verbunden, der an den Kühlanschluss 46 angeschlossen ist.

Die Pumpen 102, 104 können auf ihren jeweiligen Anwendungszweck optimiert werden. So kann die Betätigungspumpe 102 dazu ausgelegt sein, hohe Drücke in dem ersten Zweig 30A einzurichten. Andererseits kann die Kühlpumpe 104 dazu eingerichtet sein, hohe Volumenströme zu liefern. Figur 4 zeigt den Zweig 44A ohne Saugstrahlpumpe. In diesen kann jedoch, wie bei der Ausführungsform der Figur 2, eine Saugstrahlpumpe integriert werden. Die Abzweiganordnung 45 entspricht jener der Figur 1. Auch die anderen oben beschriebenen Ventile können in dieser Ausführungsform verwendet werden.

Fig. 5 zeigt eine alternative Ausführungsform einer Ventilanordnung 62', die ein 3/2-Wegeventil 64' aufweist, in das eine Blende 42' integriert ist, so dass das Ventil 64' in der zweiten Position mittels der Blende 42' einen kleinen Volumenstrom hin zu dem Kühlanschluss durchlässt.

Fig. 6 zeigt eine alternative Ausführungsform einer Ventilanordnung 62", bei der die obigen Funktionen der Umschaltanordnung 60 durch ein Druckreduzierventil 64" erzielt werden.

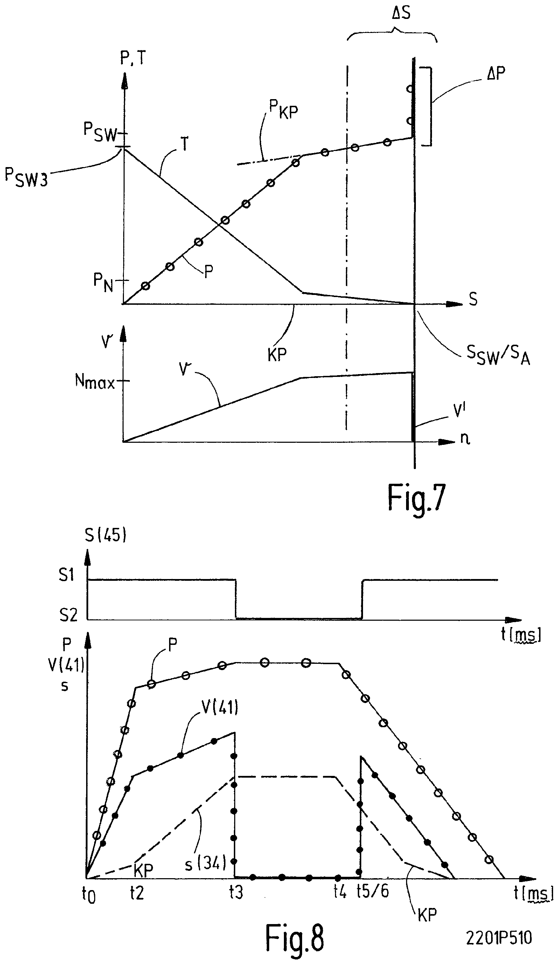

Figur 7 zeigt in schematischer Form Diagramme des Betätigungsdruckes P, eines sich in der Reibkupplung 12 hieraus entwickelnden Drehmomentes T sowie des Kühlvolumenstromes V über dem Weg s des Kolbens bzw. der Drehzahl n des Elektromotors 22.

Das obere Diagramm geht dabei auf der linken Seite von einem Zustand aus, bei dem die Reibkupplung 12 geschlossen ist, so dass ein hohes Drehmoment T von der Reibkupplung 12 übertragen werden kann. Der Druck P ist zunächst 0. Auch der Volumenstrom V ist bei diesem Ausgangszustand in der Regel 0. Bei geschlossener Kupplung kann der Elektromotor 22 in der Regel abgeschaltet werden, da ein Kühlen der Kupplung hierbei in der Regel nicht erforderlich ist.

Zum Öffnen der Kupplung 12 wird dann der Elektromotor 22 angetrieben, so dass sich die Drehzahl erhöht. Hierdurch steigt der Druck P an. Gleichzeitig hiermit nimmt das von der Kupplung 12 übertragbare Moment T ab.

Bei einem Druck P_{KP} ist der sogenannte Schleifpunkt KP (Kisspoint) erreicht. Ab diesem Zeitpunkt erhöht sich der Betätigungsdruck P mit einer geringeren Rate.

Sobald der Betätigungsdruck P einen ersten Schwellendruck P_{SW} erreicht hat, der einem Schwellenweg s_{SW} entspricht, schaltet die Abzweiganordnung 45 um, so dass ein Fluidvolumenstrom in den Nebenzweig 41 hinein schlagartig unterbrochen wird, so dass zwar keine feine Regelung des Drehmomentes T mehr möglich ist, da eine gezielte Leckage über den Nebenzweig 41 nicht mehr vorhanden ist. In diesem Betätigungsbereich ist eine solche feine Regelung jedoch auch nicht notwendig. Diese ist im Wesentlichen im Bereich des Schleifpunktes KP notwendig. Folglich ist der erste Schwellendruck P_{SW} jedenfalls größer als der Druck P_{KP}, bei dem der Schleifpunkt KP der Reibkupplung liegt.

Der Weg s_{SW} kann dabei einem Anschlagweg s_{A} entsprechen, bei dem der Kolben 34 an dem Anschlag 38 auftrifft.

In Figur 7 ist bei ΔP gezeigt, dass der Druck gegebenenfalls ausgehend von dem Schwellenwert P_{SW} in einer Variante noch weiter erhöht werden muss, um die Abzweiganordnung 45 umzuschalten.

Bei ΔS ist der Wegbereich gezeigt, innerhalb dessen die Abzweiganordnung 45 umschalten könnte. Der kleinste Wert von Δs ist dabei in jedem Fall größer als der Wegpunkt KP, bei dem der Schleifpunkt der Reibkupplung liegt.

In Figur 7 ist bei V' ferner schematisch angedeutet, dass die Umschaltanordnung 60 einen Kühlölvolumenstrom V entweder auf 0 reduzieren kann oder auf einem kleinen Wert belassen kann (beispielsweise mittels der Blende 42' in Figur 5), wodurch ein Volumenstrom V' eingestellt wird.

Bei der Ausführungsform der Fig. 2 kann die Umschaltanordnung 60 bei einem dritten Schwellendruck P_{SW3} umgeschaltet werden, der kleiner ist als der erste Schwellendruck P_{SW}, jedoch auch in jedem Fall größer als der Schleifpunktdruck P_{KP}.

Die Reibkupplung 12 wird in dem Antriebsstrang 18 in der Regel dann geöffnet, wenn in dem Stufengetriebe 84 Gangwechsel durchzuführen sind.

Nach vollzogenem Gangwechsel (das heißt Auslegen eines Quellganges und Einlegen eines Zielganges) wird die Reibkupplung 12 dann wieder geschlossen, wobei der Druck P wieder auf 0 absinkt. Um in diesem Zustand ein Nachkühlen bei geschlossener Kupplung zu erzielen, kann es vorteilhaft sein, den Druck zu diesem Zweck auf einem kleinen Wert P_{N} zu halten, der unterhalb einer Schwelle liegt, bei der die Kupplung aufgrund des entsprechend verringerten Drehmomentes T durchzurutschen beginnen könnte. Der Druck P_{N} ist folglich vorzugsweise kleiner als der Druck, der einem Moment T entspricht, das aktuell zur Übertragung von Antriebsleistung benötigt wird, ohne dass die Reibkupplung 12 durchrutscht.

Fig. 8 zeigt Zeitablaufdiagramme, und zwar zum einen der Schaltstellungen S der Abzweiganordnung 45 sowie des Betätigungsdruckes P, des Volumenstromes V (41) in den Nebenzweig 41 hinein, und des Weges s des Kolbens 34 des Fluidaktuators 14. Zunächst ist zu einem Zeitpunkt t₀ die Kupplung geschlossen. Die Abzweiganordnung 45 befindet sich in der Stellung S1, bei der ein Volumenstrom durch die Abzweiganordnung 45 hindurch in den Nebenzweig 41 strömen kann. Zum Öffnen der Kupplung wird die Drehzahl n der Pumpe erhöht, so dass der Druck P ansteigt, wie oben unter Bezugnahme auf Fig. 7 beschrieben. Hierdurch steigt auch der Volumenstrom in dem Nebenzweig an, und zwar bis zu einem Zeitpunkt t₂, bei dem der Schleifpunkt bzw. Eingriffspunkt erreicht ist. Hiernach steigt der Druck P mit einer geringeren Rate an, ähnlich wie bei der Ausführungsform der Fig. 7. Auch der Volumenstrom V (41) steigt mit einer geringeren Rate an, wohingegen der Weg s mit einer höheren Rate ansteigt, und zwar bis zu einem Zeitpunkt t₃, bei dem ein Umschaltzeitpunkt für die Abzweiganordnung 45 erreicht ist. Hier erreicht der Druck P den ersten Schwellenwert (siehe Fig. 7), worauf die Abzweiganordnung 45 umschaltet, so dass zum Zeitpunkt t₃ der Druck P zum Offenhalten der Reibkupplung 12 zwar hochgehalten wird, der Volumenstrom V (41) durch die Blende 42 hindurch jedoch komplett abgeschaltet wird, so dass die Kupplung 12 bei geringem Energieverbrauch in der geöffneten Position gehalten werden kann.

Zum Zeitpunkt t₄ wird der Druck P wieder verringert (durch Verringern der Drehzahl n der Pumpenanordnung 24), so dass zu einem Zeitpunkt t_{5/6} ein zweiter Schwellenwert erreicht wird, der kleiner ist als der erste Schwellenwert und bei dem die Abzweiganordnung 45 wieder umschaltet in die erste Stellung S1, so dass wieder ein Volumenstrom durch den Nebenzweig eingerichtet wird, und zwar rechtzeitig vor Erreichen des Eingriffspunktes KP, so dass das Schließen der Kupplung im Bereich des Eingriffspunktes KP feinfühlig geregelt bzw. eingestellt werden kann.

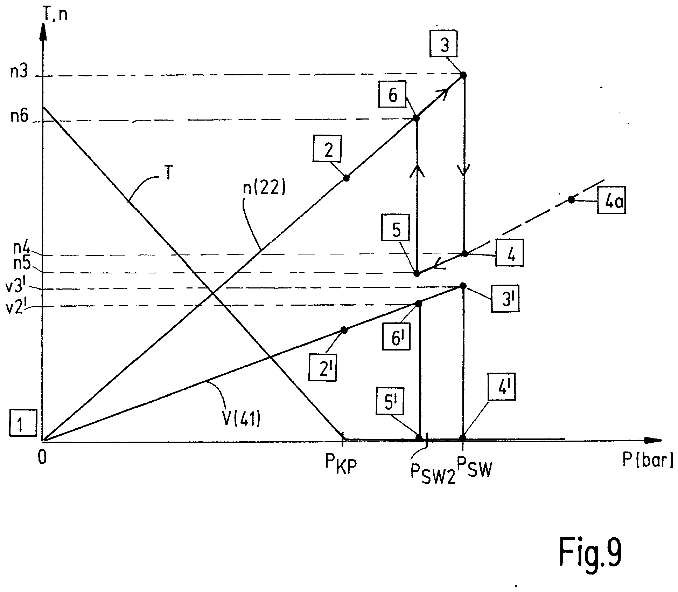

Fig. 9 zeigt in schematischer Form die oben beschriebene Hysterese betreffend den ersten Schwellenwert P_{SW} und den zweiten Schwellenwert P_{SW2}. Genauer gezeigt Fig. 9 ein Diagramm von Drehmoment T und Drehzahl n über dem Druck P. Ausgehend von einem Arbeitspunkt 1 wird die Drehzahl n (22) zunächst erhöht, wodurch der Volumenstrom V (41) ansteigt und das Drehmoment T abfällt. Zu einem Zeitpunkt P_{KP} ist das Drehmoment T auf einem Wert von 0 bzw. einem Restschleppmoment. Der Eingriffspunkt P_{KP} wird zu einem Betriebspunkt 2 erreicht. Hiernach wird die Drehzahl weiter erhöht, und zwar solange, bis zu einem Betriebszeitpunkt 3 der Druck P den ersten Schwellenwert P_{SW} erreicht. Hiernach fällt der Volumenstrom V (41) auf null ab, und zwar gezeigt durch einen Arbeitspunkt 4/4'. Auch die Drehzahl n (22) der Pumpenanordnung kann drastisch reduziert werden, da die Pumpe zu diesem Zeitpunkt nicht mehr ständig einen Volumenstrom durch den Nebenzweig fördern muss, sondern im Wesentlichen nur noch die möglichen Leckagen ausgleichen muss, die von der Pumpenanordnung auf dem Weg hin zu dem Fluidaktuator auftreten können.

Erst wenn der Druck P einen zweiten Schwellenwert P_{SW2} wieder unterschreitet, schaltet die Abzweiganordnung 45 wieder in die erste Stellung S1 um, wodurch der Volumenstrom V (41) vom Arbeitspunkt 5' zum Arbeitspunkt 6' wieder ansteigt, und gleichzeitig die Drehzahl n (22) der Pumpenanordnung vom Arbeitspunkt 5 zum Arbeitspunkt 6 wieder erhöht werden muss, um den nun eingerichteten Volumenstrom ausgleichen zu können.

## Patentansprüche

1. Kupplungsanordnung (10), insbesondere für ein manuelles oder ein automatisiertes Kraftfahrzeug-Stufengetriebe (84), mit
- einer nasslaufenden Reibkupplung (12) zur Anordnung zwischen einem Antriebsmotor (82) und einem Stufengetriebe (84),
- einem Fluidaktuator (14) zur Betätigung der Reibkupplung (12),
- einer Fluidversorgungseinrichtung (20), die einen Elektromotor (22) und eine von dem Elektromotor (22) angetriebene Pumpenanordnung (24) aufweist, wobei die Pumpenanordnung (24) über einen ersten Zweig (30) mit dem Fluidaktuator (14) verbunden ist,
- einem Nebenzweig (41), über den ein Teil des von der Pumpenanordnung (24) bereit gestellten Fluidvolumenstroms hin zu einem Niederdruckbereich (44) leitbar ist, und
- einer Abzweiganordnung (45),
**gekennzeichnet dadurch, dass** die Abzweiganordnung (45) dazu angesteuert wird den zu dem Nebenzweig (41) geleiteten Neben-Fluidvolumenstrom zu reduzieren, wenn ein Betätigungsdruck (P) in dem Fluidaktuator (14) einen Schwellendruck (P_{SW}) überschreitet und/oder der Fluidaktuator (14) einen Schwellenweg (S_{SW}) überschreitet, wobei die Abzweiganordnung (45) so ausgebildet ist, dass in jedem ihrer Betriebszustände eine direkte Verbindung zwischen der Pumpenanordnung (24) und dem Fluidaktuator (14) eingerichtet ist.

2. Kupplungsanordnung nach Anspruch 1, **dadurch gekennzeichnet, dass** die Reibkupplung (12) in eine geschlossene Position vorgespannt ist.

3. Kupplungsanordnung nach Anspruch 1 oder 2, **dadurch gekennzeichnet, dass** der Schwellendruck (P_{SW}) größer ist als ein Schleifpunkt-Betätigungsdruck (P_{KP}), bei dem die Reibkupplung (12) ihren Schleifpunkt (KP) hat.

4. Kupplungsanordnung nach einem der Ansprüche 1 - 3, **dadurch gekennzeichnet, dass** die Abzweiganordnung (45) dazu ansteuerbar ist, um den zu dem Nebenzweig (41) geleiteten Neben-Fluidvolumenstrom zu unterbrechen, wenn der Betätigungsdruck (P) in dem Fluidaktuator (14) den Schwellendruck (P_{SW}) überschreitet und/oder der Fluidaktuator (14) den Schwellenweg (S_{SW}) überschreitet.

5. Kupplungsanordnung nach einem der Ansprüche 1 - 4, **dadurch gekennzeichnet, dass** die Abzweiganordnung (45) dazu ausgebildet ist, den Fluidvolumenstrom von der Pumpenanordnung (24) in einen Fluidvolumenstrom zu dem Fluidaktuator und einen Neben-Fluidvolumenstrom zu dem Nebenzweig (41) aufzuteilen, wenn der Betätigungsdruck (P) in dem Fluidaktuator (14) einen zweiten Schwellendruck (P_{SW2}) unterschreitet und/oder der Fluidaktuator (14) einen zweiten Schwellenweg unterschreitet.

6. Kupplungsanordnung nach einem der Ansprüche 1 - 5, **dadurch gekennzeichnet, dass** der Nebenzweig (41) eine Blende (42) aufweist.

7. Kupplungsanordnung nach einem der Ansprüche 1 - 6, **dadurch gekennzeichnet, dass** der Nebenzweig (41) mit einer Kühleinrichtung (16) zur Fluidkühlung der Reibkupplung (12) verbunden ist.

8. Kupplungsanordnung nach Anspruch 7, **dadurch gekennzeichnet, dass** der Nebenzweig (41) eine Umschaltanordnung (60) aufweist, die dazu ansteuerbar ist, um einen Fluidvolumenstrom zu der Kühleinrichtung (16) zu reduzieren, wenn ein Betätigungsdruck (P) in dem Fluidaktuator (14) einen dritten Schwellendruck (P_{SW}) überschreitet und/oder der Fluidaktuator (14) einen dritten Schwellenweg (S_{SW}) überschreitet.

9. Kupplungsanordnung nach einem der Ansprüche 1 - 8 oder nach dem Oberbegriff des Anspruchs 1, **dadurch gekennzeichnet, dass** der Nebenzweig (41) mit einem Treibanschluss (50) einer Saugstrahlpumpe (48) verbunden ist.

10. Kupplungsanordnung nach einem der Ansprüche 1 - 9, **dadurch gekennzeichnet, dass** die Pumpenanordnung (24) durch eine einzelne Pumpe gebildet ist, die einen ersten Pumpenanschluss (28) aufweist, der mit der Abzweiganordnung (45) verbunden ist.

11. Kupplungsanordnung nach einem der Ansprüche 1 - 10, **dadurch gekennzeichnet, dass** die Pumpenanordnung (22) eine Betätigungspumpe (102) und eine Kühlpumpe (104) aufweist, wobei ein Pumpenanschluss (28) der Betätigungspumpe (102) mit der Abzweiganordnung (45) verbunden ist und wobei ein Pumpenanschluss (106) der Kühlpumpe (104) mit einer Kühleinrichtung (16) der Reibkupplung (12) verbunden ist.

12. Kupplungsanordnung nach einem der Ansprüche 1 - 11, **dadurch gekennzeichnet, dass** die Abzweiganordnung (45) eine Ventilanordnung (62) aufweist, die zur Ventilbetätigung in Abhängigkeit von einem Betätigungsdruck (P) mit dem Fluidaktuator (14) hydraulisch verbunden ist.

13. Antriebsstrang (80) mit einem Antriebsmotor (82), mit einer Kupplungsanordnung (10), die eine Reibkupplungsanordnung (12) mit einem Eingangsglied (90) aufweist, das mit dem Antriebsmotor (82) verbunden ist, und mit einem Stufengetriebe (84), dessen Eingang mit einem Ausgang (92) der Reibkupplungsanordnung (12) verbunden ist, **dadurch gekennzeichnet, dass** die Kupplungsanordnung eine Kupplungsanordnung (10) nach einem der Ansprüche 1 - 12 ist.

14. Verfahren zur Betätigung und ggf. zur Kühlung einer Kupplungsanordnung, insbesondere einer Kupplungsanordnung (10) nach einem der Ansprüche 1 - 12, wobei die Kupplungsanordnung (10) eine nasslaufende Reibkupplung (12) sowie eine Fluidversorgungseinrichtung (20) aufweist, die mit einem Fluidaktuator (14) zur Betätigung der Reibkupplung (12) verbunden ist, wobei die Fluidversorgungseinrichtung (20) dazu ausgebildet ist, einen geregelten Betätigungsdruck (P) für den Fluidaktuator (14) einzustellen und über eine Abzweiganordnung (45) mit einem Nebenzweig (41) verbunden zu werden, über den bedarfsweise ein Teil des von der Pumpenanordnung (24) bereit gestellten Fluidvolumenstroms hin zu einem Niederdruckbereich (44) leitbar ist, wobei das Verfahren den Schritt beinhaltet, den zu dem Nebenzweig (41) geleiteten Fluidvolumenstrom zu reduzieren, wenn ein Betätigungsdruck (P) in dem Fluidaktuator (14) einen Schwellendruck (P_{SW}) überschreitet und/oder der Fluidaktuator (14) einen Schwellenweg (S_{SW}) überschreitet, wobei die Abzweiganordnung (45) so ausgebildet ist, dass in jedem ihrer Betriebszustände eine direkte Verbindung zwischen der Pumpenanordnung (24) und dem Fluidaktuator (14) eingerichtet ist.

## Claims

1. Coupling assembly (10), in particular for a manual or an automated motor vehicle multi-step transmission (84), having
- a wet-running friction clutch (12) for arranging between a drive engine (82) and a multi-step transmission (84),
- a fluid actuator (14) for actuating the friction clutch (12),
- a fluid supply device (20) which has an electric motor (22) and a pump assembly (24) which is driven by the electric motor (22), the pump assembly (24) being connected via a first branch (30) to the fluid actuator (14),
- a secondary branch (41), via which a part of the fluid volumetric flow which is provided by the pump assembly (24) can be conducted to a low pressure region (44), and
- a branch assembly (45),
**characterized in that** the branch assembly (45) is actuated to reduce the secondary fluid volumetric flow which is conducted to the secondary branch (41) if an actuating pressure (P) in the fluid actuator (14) exceeds a threshold pressure (P_{SW}) and/or the fluid actuator (14) exceeds a threshold travel (S_{SW}), the branch assembly (45) being configured in such a way that a direct connection between the pump assembly (24) and the fluid actuator (14) is set up in each of its operating states.

2. Coupling assembly according to Claim 1, **characterized in that** the friction clutch (12) is prestressed into a closed position.

3. Coupling assembly according to Claim 1 or 2, **characterized in that** the threshold pressure (P_{SW}) is greater than a biting point actuating pressure (P_{KP}), at which the friction clutch (12) has its biting point (KP).

4. Coupling assembly according to one of Claims 1 to 3, **characterized in that** the branch assembly (45) can be actuated to interrupt the secondary fluid volumetric flow which is conducted to the secondary branch (41) if the actuating pressure (P) in the fluid actuator (14) exceeds the threshold pressure (Psw) and/or the fluid actuator (14) exceeds the threshold travel (Ssw).

5. Coupling assembly according to one of Claims 1 to 4, **characterized in that** the branch assembly (45) is configured to divide the fluid volumetric flow from the pump assembly (24) into a fluid volumetric flow to the fluid actuator and a secondary fluid volumetric flow to the secondary branch (41) if the actuating pressure (P) in the fluid actuator (14) undershoots a second threshold pressure (P_{SW2}) and/or the fluid actuator (14) undershoots a second threshold travel.

6. Coupling assembly according to one of Claims 1 to 5, **characterized in that** the secondary branch (41) has an orifice (42).

7. Coupling assembly according to one of Claims 1 to 6, **characterized in that** the secondary branch (41) is connected to a cooling device (16) for fluid cooling of the friction clutch (12).

8. Coupling assembly according to Claim 7, **characterized in that** the secondary branch (41) has a switchover assembly (60) which can be actuated to reduce a fluid volumetric flow to the cooling device (16) if an actuating pressure (P) in the fluid actuator (14) exceeds a third threshold pressure (P_{SW}) and/or the fluid actuator (14) exceeds a third threshold travel (S_{SW}).

9. Coupling assembly according to one of Claims 1 to 8 or according to the precharacterizing clause of Claim 1, **characterized in that** the secondary branch (41) is connected to a drive connector (50) of a suction jet pump (48).

10. Coupling assembly according to one of Claims 1 to 9, **characterized in that** the pump assembly (24) is formed by way of a single pump which has a first pump connector (28) which is connected to the branch assembly (45).

11. Coupling assembly according to one of Claims 1 to 10, **characterized in that** the pump assembly (22) has an actuating pump (102) and a cooling pump (104), a pump connector (28) of the actuating pump (102) being connected to the branch assembly (45), and a pump connector (106) of the cooling pump (104) being connected to a cooling device (16) of the friction clutch (12).

12. Coupling assembly according to one of Claims 1 to 11, **characterized in that** the branch assembly (45) has a valve arrangement (62) which is connected hydraulically to the fluid actuator (14) for valve actuation in a manner which is dependent on an actuating pressure (P).

13. Powertrain (80) having a drive engine (82), having a coupling assembly (10) which has a friction clutch assembly (12) with an input member (90) which is connected to the drive engine (82), and having a multi-step transmission (84), the input of which is connected to an output (92) of the friction clutch assembly (12), **characterized in that** the coupling assembly is a coupling assembly (10) according to one of Claims 1 to 12.

14. Method for actuating and optionally for cooling a coupling assembly, in particular a coupling assembly (10) according to one of Claims 1 to 12, the coupling assembly (10) having a wet-running friction clutch (12) and a fluid supply device (20) which is connected to a fluid actuator (14) for actuating the friction clutch (12), the fluid supply device (20) being configured to set a regulated actuating pressure (P) for the fluid actuator (14) and to be connected via a branch assembly (45) to a secondary branch (41), via which a part of the fluid volumetric flow which is provided by the pump assembly (24) can be conducted as required to a low pressure region (44), the method comprising the step of reducing the fluid volumetric flow which is conducted to the secondary branch (41) if an actuating pressure (P) in the fluid actuator (14) exceeds a threshold pressure (P_{SW}) and/or the fluid actuator (14) exceeds a threshold travel (S_{SW}), the branch assembly (45) being configured in such a way that a direct connection between the pump assembly (24) and the fluid actuator (14) is set up in each of its operating states.

## Revendications

1. Agencement d'embrayage (10), en particulier pour une transmission étagée d'un véhicule automobile (84), manuelle ou automatisée, comprenant
- un embrayage à friction humide (12) destiné à être disposé entre un moteur d'entraînement (82) et une transmission étagée (84),
- un actionneur fluidique (14) destiné à actionner l'embrayage à friction (12),
- un dispositif d'alimentation en fluide (20), qui présente un moteur électrique (22) et un agencement de pompe (24) entraîné par le moteur électrique (22), l'agencement de pompe (24) étant connecté par le biais d'une première branche (30) à l'actionneur fluidique (14),
- une branche secondaire (41) par le biais de laquelle une partie du débit volumique de fluide fourni par l'agencement de pompe (24) peut être conduite à une région basse pression (44), et
- un agencement de dérivation (45),
**caractérisé en ce que** l'agencement de dérivation (45) est commandé de manière à réduire le débit volumique de fluide secondaire conduit à la branche secondaire (41) lorsqu'une pression d'actionnement (P) dans l'actionneur fluidique (14) dépasse une pression seuil (P_{SW}) et/ou lorsque l'actionneur fluidique (14) dépasse une course seuil (S_{SW}), l'agencement de dérivation (45) étant réalisé de telle sorte que dans chacun de ses états de fonctionnement, une connexion directe entre l'agencement de pompe (24) et l'actionneur fluidique (14) soit établie.

2. Agencement d'embrayage selon la revendication 1, **caractérisé en ce que** l'embrayage à friction (12) est précontraint dans une position fermée.

3. Agencement d'embrayage selon la revendication 1 ou 2, **caractérisé en ce que** la pression seuil (P_{SW}) est supérieure à une pression d'actionnement de point de glissement (P_{KP}) à laquelle l'embrayage à friction (12) présente son point de glissement (KP).

4. Agencement d'embrayage selon l'une quelconque des revendications 1 à 3, **caractérisé en ce que** l'agencement de dérivation (45) peut être commandé de manière à interrompre le débit volumique de fluide secondaire guidé vers la branche secondaire (41) lorsque la pression d'actionnement (P) dans l'actionneur fluidique (14) dépasse la pression seuil (P_{SW}) et/ou que l'actionneur fluidique (14) dépasse la course seuil (S_{SW}).

5. Agencement d'embrayage selon l'une quelconque des revendications 1 à 4, **caractérisé en ce que** l'agencement de dérivation (45) est réalisé de manière à diviser le débit volumique de fluide de l'agencement de pompe (24) en un débit volumique de fluide allant vers l'actionneur fluidique et un débit volumique de fluide secondaire allant vers la branche secondaire (41) lorsque la pression d'actionnement (P) dans l'actionneur fluidique (14) passe en dessous d'une deuxième pression seuil (P_{SW2}) et/ou que l'actionneur fluidique (14) passe en dessous d'une deuxième course seuil.

6. Agencement d'embrayage selon l'une quelconque des revendications 1 à 5, **caractérisé en ce que** la branche secondaire (41) présente un diaphragme (42).

7. Agencement d'embrayage selon l'une quelconque des revendications 1 à 6, **caractérisé en ce que** la branche secondaire (41) est connectée à un dispositif de refroidissement (16) pour le refroidissement du fluide de l'embrayage à friction (12).

8. Agencement d'embrayage selon la revendication 7, **caractérisé en ce que** la branche secondaire (41) présente un agencement de commutation (60) qui peut être commandé afin de réduire un débit volumique de fluide allant vers le dispositif de refroidissement (16) lorsqu'une pression d'actionnement (P) dans l'actionneur fluidique (14) dépasse une troisième pression seuil (P_{SW}) et/ou que l'actionneur fluidique (14) passe en dessous d'une troisième course seuil (S_{SW}).

9. Agencement d'embrayage selon l'une quelconque des revendications 1 à 8 ou selon le préambule de la revendication 1, **caractérisé en ce que** la branche secondaire (41) est connectée à un raccord d'entraînement (50) d'une pompe à jet aspirant (48).

10. Agencement d'embrayage selon l'une quelconque des revendications 1 à 9, **caractérisé en ce que** l'agencement de pompe (24) est formé par une pompe unique qui présente un premier raccord de pompe (28) qui est connecté à l'agencement de dérivation (45).

11. Agencement d'embrayage selon l'une quelconque des revendications 1 à 10, **caractérisé en ce que** l'agencement de pompe (22) présente une pompe d'actionnement (102) et une pompe de refroidissement (104), un raccord de pompe (28) de la pompe d'actionnement (102) étant connecté à l'agencement de dérivation (45) et un raccord de pompe (106) de la pompe de refroidissement (104) étant connecté à un dispositif de refroidissement (16) de l'embrayage à friction (12).

12. Agencement d'embrayage selon l'une quelconque des revendications 1 à 11, **caractérisé en ce que** l'agencement de dérivation (45) présente un agencement de soupape (62) qui, pour l'actionnement de la soupape en fonction d'une pression d'actionnement (P), est connecté hydrauliquement à l'actionneur fluidique (14).

13. Chaîne cinématique (80) comprenant un moteur d'entraînement (82) avec un agencement d'embrayage (10) qui présente un agencement d'embrayage à friction (12) avec un organe d'entrée (90) qui est connecté au moteur d'entraînement (82) et avec une transmission étagée (84) dont l'entrée est connectée à une sortie (92) de l'agencement d'embrayage à friction (12), **caractérisée en ce que** l'agencement d'embrayage est un agencement d'embrayage (10) selon l'une quelconque des revendications 1 à 12.

14. Procédé d'actionnement et éventuellement de refroidissement d'un agencement d'embrayage, en particulier d'un agencement d'embrayage (10) selon l'une quelconque des revendications 1 à 12, dans lequel l'agencement d'embrayage (10) présente un embrayage à friction humide (12) ainsi qu'un dispositif d'alimentation en fluide (20) qui est connecté à un actionneur fluidique (14) pour actionner l'embrayage à friction (12), le dispositif d'alimentation en fluide (20) étant réalisé de manière à ajuster une pression d'actionnement régulée (P) pour l'actionneur fluidique (14) et de manière à être connecté par le biais d'un agencement de dérivation (45) à une branche secondaire (41) par le biais de laquelle au besoin une partie du débit volumique de fluide fourni par l'agencement de pompe (24) peut être conduite vers une région basse pression (44), le procédé comprenant l'étape consistant à réduire le débit volumique de fluide conduit à la branche secondaire (41) lorsqu'une pression d'actionnement (P) dans l'actionneur fluidique (14) dépasse une pression seuil (P_{SW}) et/ou que l'actionneur fluidique (14) dépasse une course seuil (S_{SW}), l'agencement de dérivation (45) étant réalisé de telle sorte que dans chacun de ses états de fonctionnement, une connexion directe soit établie entre l'agencement de pompe (24) et l'actionneur fluidique (14).
